# EUROPÄISCHE PATENTSCHRIFT

(11) **EP 1 575 737 B1**
(45) Veröffentlichungstag und Bekanntmachung des Hinweises auf die Patenterteilung: **31.05.2006**
(21) Anmeldenummer: 03782306.9
(22) Anmeldetag: 04.12.2003
(51) Int. Cl.: B23Q 1/00, B23Q 7/02, B23Q 39/02, B23Q 7/14

(54) **WERKZEUGMASCHINE MIT PALETTENWECHSELMODUL**
MACHINE TOOL PROVIDED WITH PALLET CHANGING MODULE
MACHINE-OUTIL POURVUE D'UN MODULE DE REMPLACEMENT DE PALETTES

(30) Priorität: 16.12.2002 DE 10258734
(43) Veröffentlichungstag der Anmeldung: 21.09.2005
(73) Patentinhaber: Alfing Kessler Sondermaschinen GmbH, 73433 Aalen (DE)
(72) Erfinder: HANSCH, Stefan, 09123 Chemnitz (DE); BIELITZA, Peter, 73431 Aalen (DE)
(74) Vertreter: HOFFMANN EITLE
(86) Internationale Anmeldenummer: PCT/EP2003/013717
(87) Internationale Veröffentlichungsnummer: WO 2004/054753

(56) Entgegenhaltungen:
- EP-A- 0 908 269
- PATENT ABSTRACTS OF JAPAN & JP 2003 340673 A (OKUMA MACHINERY WORKS), 2. Dezember 2003 (2003-12-02)

## Beschreibung

### Gebiet der Erfindung

Die Erfindung betrifft eine Werkzeugmaschine, insbesondere zur spangebenden Bearbeitung von Werkstücken.

Solche Werkzeugmaschinen dienen dazu, verschiedenste Werkstücke aus metallischen Werkstoffen, insbesondere Leichtmetall, formgebend und spangebend zu bearbeiten. Dabei können kompliziert geformte Werkstücke bearbeitet und hergestellt werden, bei denen häufig mehrere unterschiedliche spangebende Bearbeitungsvorgänge, auch mit zum Teil unterschiedlichen Werkzeugen, vorgenommen werden müssen. Die Werkzeugmaschinen sollen neben der möglichst raschen und präzisen Bearbeitung des Werkstücks, die möglichst ohne Umrüstung des Werkstücks, also ohne erneute Aufspannung auf einen Spanntisch oder ähnliches, vorgenommen werden soll, kurze Umrüstzeiten zwischen der Bearbeitung zweier unterschiedlicher Werkstücke ermöglichen, so dass die Maschine möglichst geringe Rüstzeiten hat.

### Stand der Technik

Dabei ist es bekannt, sog. modulartige Werkzeugmaschinen einzusetzen. Dies sind Werkzeugmaschinen, die mindestens ein Bearbeitungsmodul umfassen, an dem die Spindel angebracht ist, sowie ein Aufspannmodul, auf das das Werkstück während der Bearbeitung aufgespannt werden kann. Die modulartige Bauweise ist dabei so gewählt, dass verschiedene Ausführungsformen der Spindel beispielsweise mit einem bestimmten Aufspannmodul gekoppelt werden können und umgekehrt.

Ferner sind Werkzeugmaschinen bekannt, die zudem ein Palettenwechselmodul umfassen, das bezüglich des Aufspannmoduls symmetrisch an diesem angebracht ist und dazu dient, Werkstücke auf das Aufspannmodul zu bringen und davon zu entnehmen. Das Falettenwechselmodul ist z. B. mit zwei Aufnahmebereichen für Werkstücke aufgebaut, so dass ein erstes werkstück, das auf dem Palettenwechselmodul, angebracht ist, durch das Aufspannmodul gerade gespannt wird und mittels des Spindelmoduls, d. h. des Bearbeitungsmoduls in Bearbeitung ist, während im zweiten Werkstückbereich des Palettenwechselmoduls ein zweites Werkstück gerade vom Palettenwechselmodul entnommen werden kann und ein neues darauf platziert werden kann, das nach Fertigstellung der Bearbeitung des ersten Werkstücks durch beispielsweise eine Drehbewegung in die Bearbeitungs- und Aufspannposition auf das Aufspannmodul geschwenkt werden kann. Dadurch können die Umrüstzeiten, minimiert werden, da nicht der vollständige Umrüstvorgang bei Stillstand des Bearbeitungsmoduls vorgenommen werden muss, sondern vielmehr die eigentliche Entnahme und das eigentliche Beschicken des Werkstücks unabhängig von der Fertigstellung bzw. dem Beginn der Bearbeitung des werkstücks vorgenommen werden können. Ein Beispiel für solch eine Anordnung ist in der EP 0 908 269 A2 gezeigt; in diesem Beispiel wird zudem die Bearbeitung mittels zwei aufeinander zu weisenden Spindeln mit parallelen Achsen durchgeführt. Die Achsrichtung ist senkrecht zur Drehachse des Palettenwechslers und senkrecht zur Verbindung zwischen Bearbeitungs- und Aufspannpositionen.
Diese Anordnung entspricht dem nächstkommenden Stand der Technik nach dem Oberbegriff des Anspruchs 1.
JP 2003-340673 A (Patent Abstracts of Japan) zeigt einen drehbaren Palettenwechsler, der mit seiner Drehachse mittig auf einem Bett angeordnet ist. Er kann Paletten von einer Aufspann- zu einer Bearbeitungsposition drehen. In der Bearbeitungsposition befinden sich die Paletten mittig über der Mittellinie eines Bearbeitungstisches einer an dem Bett festen Werkzeugmaschine. Die Drehachse liegt nicht in der Flucht der Mittellinie.

### Darstellung der Erfindung

Es ist eine Aufgabe der Erfindung, eine modular aufgebaute Werkzeugmaschine vorzusehen, die eine hohe Flexibilität beim Aufbau der Module vorsieht, zur Trockenbearbeitung geeignet ist und hohe Flexibilität hinsichtlich der Anordnung des Bearbeitungsmoduls bezüglich des Aufspannmoduls bietet.

Diese Aufgabe wird mit einer Werkzeugmaschine mit den Merkmalen des Anspruchs 1 gelöst.

Der Erfindung liegt der Gedanke zugrunde, eine horizontal ausgerichtete Spindelachse beizubehalten, da bei der horizontal ausgerichteten Spindel die Späne, die bei der Trockenbearbeitung anfallen, frei nach unten in den Entsorgungskanal der Werkzeugmaschine fallen können. Um dennoch eine hohe Flexibilität hinsichtlich des Anordnens des Bearbeitungsmoduls mit den horizontal ausgerichteten Spindeln bzw. der horizontal ausgerichteten Spindel an das Aufspannmodul vorzusehen, das fest mit einem Palettenwechselmodul verbunden ist, ist das Palettenwechselmodul asymmetrisch bezüglich einer Mittelebene ausgerichtet, die die Mitte des Aufspannmoduls und des Bearbeitungsmoduls angibt und im Wesentlichen parallel zur Spindelachsenrichtung verlauft. Dadurch ist es möglich, neben einem sog. Einspindler, d. h. einer Werkzeugmaschine, die ein Bearbeitungsmodul mit einer horizontal ausgerichteten Spindel umfasst, auch Anordnungen als sog. Zweispindler zu realisieren, d. h. Anordnungen, bei denen zwei Bearbeitungsmodule vorgesehen sind, die zueinander im Winkel von 90° angeordnet sind, d. h. die Spindelachsen verlaufen in einem Winkel von 90° zueinander, ohne dass Modifikationen an der Kombination aus Aufspannmodul und Palettenwechselmodul erforderlich sind.

Dies wird bevorzugt dadurch erreicht, dass das Palettenwechselmodul über zwei der vertikal ausgerichteten Flächen des im Wesentlichen quaderförmigen Aufspannmoduls nicht übersteht. An diesen Flächen, über die das Palettenwechselmodul nicht übersteht, können die Bearbeitungsmodule angekoppelt werden.

Schließlich ermöglicht es die asymmetrische Anordnung des Palettenwechselmoduls am Aufspannmodul, dass ein sog. Synchro-Konzept aufgebaut werden kann, bei dem spiegelsymmetrisch zwei Anordnungen aus Bearbeitungsmodul, Aufspannmodul und Palettenwechselmodul aneinander angekoppelt sind, was die Bearbeitung zweier Werkstücke synchron auf verhältnismäßig kompaktem Raum ermöglicht.

Durch die horizontale Anordnung der Spindel sowie das Vorsehen eines separaten Bearbeitungsmoduls, das lediglich an einer der Stirnseiten des quaderförmigen Aufspannmoduls angekoppelt wird, ist zudem eine gute Trennung des Antriebs und des Spannraums möglich, so dass die Gefahr des Eindringens von Spänen in den Antriebsraum verringert wird. Da die Anordnung des Palettenwechselmoduls in horizontaler Richtung bereits bekannt ist und entsprechende Fördertechnik für das Beladen bzw. Entladen der Palette in vielen Bearbeitungsbereichen vorgesehen sind, ist die Anordnung auch dahingehend vorteilhaft, dass durch die ebenfalls horizontale und damit sich bezüglich des Be- und Entladens nicht unterscheidende Gestaltung des Palettenwechselmoduls keine neuen Vorrichtungen für das Be- und Entladen von Werkstückpaletten erforderlich sind. Gleichzeitig bleibt der Aufbau verhältnismäßig steif, so dass Einsatzmöglichkeiten der Werkzeugmaschine in der Guss- und Stahlbearbeitung neben dem Einsatz in der Leichtmetallbearbeitung möglich sind.

Vorteilhafte Ausführungsformen sind durch die übrigen Ansprüche gekennzeichnet.

So ist nach einer bevorzugten Ausführungsform das Aufspannmodul im Wesentlichen quaderförmig und das Palettenwechselmodul derartig außermittig an das Aufspannmodul angekoppelt, dass es über maximal zwei der vertikal ausgerichteten Seitenflächen des Quaders übersteht. Diese Anordnung ermöglicht es, die genannten verschiedenen Konzepte, nämlich das Einspindel-Konzept, das Zweispindel-Konzept sowie das Synchro-Konzept ohne Modifikation der Verbindung zwischen Aufspannmodul und Palettenwechselmodul zu erreichen.

Beispielsweise ist das Palettenwechselmodul in einem Winkel von etwa 45° zu der genannten Mittelebene angekoppelt, d. h. auf einer fiktiven horizontal verlaufenden Achse, die vom Mittelpunkt des Aufspannmoduls in eine von dessen Ecken verlauft. Dadurch ist zudem eine besonders gute Zugänglichkeit an das zu rüstende Werkstück gegeben, wobei der Palettenwechsler neben der manuellen Beladung auch eine hauptzeitparallele Roboterbeladung, beispielsweise mit Portal- oder Gelenkarm, ermöglicht.

Vorzugsweise weist dazu das Palettenwechselmodul mindestens zwei Aufnahmen für Paletten auf, so dass hauptzeitparallel, d. h. während der Bearbeitung eines Werkstücks auf einer der Paletten, das andere Werkstück beladen werden kann. Dies verringert die Rüstzeiten und damit die Stillstandzeiten der Werkzeugmaschine erheblich.

Nach einer besonders bevorzugten Ausführungsform ist dazu das Palettenwechselmodul als Drehteller gestaltet, der eine Drehachse aufweist, die auf einer gedachten Linie vom Mittelpunkt des Aufspannmoduls zu einem von dessen Eckpunkten in horizontaler Lage verläuft. Die Drehachse des Drehtellers verläuft vertikal. Damit ist der Drehteller an sich horizontal angeordnet, so dass er für gewöhnliche Be- und Entladevorrichtungen für die Werkstückpaletten geeignet ist.

Vorzugsweise umfasst die Anordnung zwei Bearbeitungsmodule, ein Aufspannmodul und ein Palettenwechselmodul, wobei die Bearbeitungsmodule zueinander im Winkel von 90° an das Aufspannmodul angeschlossen sind und das Palettenwechselmodul außermittig zu jeder der fiktiven Mittelebenen angeordnet ist, die durch jeweils ein Bearbeitungsmodul und das Aufspannmodul verlaufen und vertikal ausgerichtet sind. Dies bedeutet gleichzeitig, dass die fiktiven Ebenen jeweils parallel zu den Spindelachsen eines Bearbeitungsmoduls sind. Nach einer besonders bevorzugten Ausführungsform ist dabei das Pälettenwechselmodul so angeordnet, dass es im Wesentlichen im Bereich desjenigen Kreuzungspunkts zweier Stirnflächen des Aufspannmoduls angeordnet ist, an denen kein Bearbeitungsmodul vorgesehen ist und die jeweils vertikal verlaufen. Dies ermöglicht die zeitgleiche Bearbeitung eines Werkstücks, das auf dem Aufspannmodul aufgespannt ist, durch zwei Spindeln, die senkrecht zueinander angeordnet sind und deren Spindelachse jeweils horizontal verläuft.

Nach einer besonders bevorzugten Ausführungsform ist das Bearbeitungsmodul als Drei-Achs-Bearbeitungseinheit ausgestaltet. Beispielsweise ist dazu die Spindel an einem ersten Ende eines Schwenkarms linear verschiebbar in der Richtung parallel zur Spindelrotationsachse gelagert und der Schwenkarm an seinem zweiten Ende um eine Achse parallel zur Rotationsachse der Spindel drehbar gelagert, wobei die Lagerung des Schwenkarms wiederum in einer Richtung senkrecht zur Verschieberichtung der Spindel, also im vorliegenden Fall vertikal, verschiebbar ist, unabhängig von der Schwenkposition des Schwenkarms. Dadurch ist es möglich, Rund- und Linearachsen für die Bewegung der Spindel zu kombinieren, was zu einem sehr kompakten und damit steifen Grundaufbau führt. Daraus resultieren geringe bewegte Massen, die Voraussetzung für hohe Dynamikwerte sind und letztendlich auch das Einsatzkriterium für Direktantriebe sind. Alternativ können auch Kugelgewindetriebe als Antriebskomponenten eingesetzt werden.

Vorteilhafter Weise ist schließlich für jedes Bearbeitungsmodul mindestens ein Werkzeugmagazin am Bearbeitungsmodul vorgesehen. Dadurch können die Werkzeuge direkt über die Hauptspindel in und aus dem Werkzeugmagazin beladen werden.

Vorteilhafter Weise ist das Aufspannmodul als Drehtisch gestaltet. Dabei können übliche NC-Rundtische eingesetzt werden, die es ermöglichen, das Werkstück in unterschiedlichen Positionen der Spindel zu präsentieren. Anstatt des Rundtischs sind beispielsweise auch Wendespanner einsetzbar.

### Kurze Beschreibung der Zeichnungen

Nachfolgend wird die Erfindung rein beispielhaft anhand der beigefügten Figuren beschrieben, in denen
- Figur 1: eine Draufsicht auf eine Werkzeugmaschine zeigt, die zur Erläuterung der vorliegenden Erfindung dient aber nicht Gegenstand der Erfindung ist.
- Figur 2: eine Seitenansicht der Werkzeugmaschine aus Figur 1 zeigt;
- Figur 3: eine erste Ausführungsform der Werkzeugmaschine gemäß der Erfindung zeigt; und
- Figur 4: eine weitere Werkzeugmaschine darstellt, die zur Erläuterung der vorliegenden Erfindung dient aber nicht Gegenstand der Erfindung ist.

### Wege zur Ausführung der Erfindung

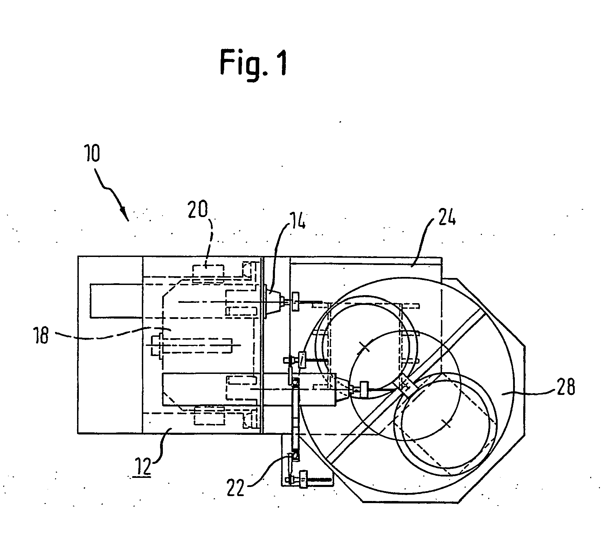

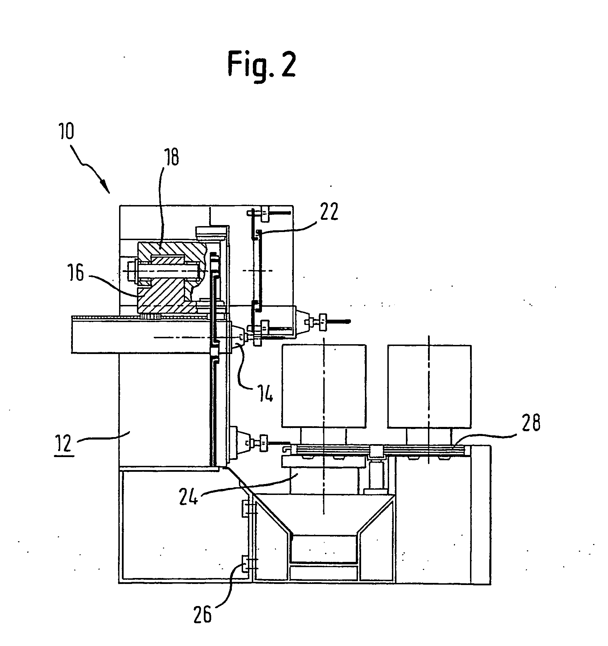

Figur 1 zeigt die Draufsicht auf eine Werkzeugmaschine 10, die insbesondere zur spangebenden Bearbeitung von metallischen Werkstücken, insbesondere Leichtmetall werkstücken, geeignet ist. Die werkzeugmaschine 10 umfasst ein Bearbeitungsmodul 12 an dem eine Spindel 14 derartig gelagert ist, dass die Spindelachse horizontal verläuft. Dies ist in der Seitenansicht, die in Figur 2 dargestellt ist, gut zu erkennen. Die Spindel 14 ist ihrerseits an einem Schwenkarm 16 gelagert, so dass sie in horizontaler Richtung linear an dem Schwenkarm 16 verfahrbar ist, d. h. in horizontaler Richtung parallel zur Spindelachse. Der Schwenkarm 16 seinerseits ist an einer Konsole 18 drehbar gelagert, wobei die Schwenkbewegung in einer Ebene senkrecht zur Spindelachse verläuft. Die Konsole 18 ihrerseits ist in vertikaler Richtung verschiebbar am Bearbeitungsmodul gelagert. Dazu sind beispielsweise Linearantriebe 20 vorgesehen.

Anders gestaltete Bearbeitungseinheiten sind ebenfalls möglich, die eine horizontal angebrachte Spindel aufweisen. Vorzugsweise werden jedoch Drei-Achs-Bearbeitungseinheiten eingesetzt, da diese eine erhöhte Flexibilität bezüglich der Werkstückbearbeitung aufweisen.

In der in Figuren 1 und 2 dargestellten Werkzeugmaschine umfasst das Bearbeitungsmodul 12 jeweils eine Spindel, wobei die Spindel jedoch in unterschiedlichen Positionen dargestellt ist.

Schließlich ist an dem Bearbeitungsmodul 12 ein Werkzeugmagazin 22 angebracht, so dass Werkzeuge, die zur Bearbeitung des Werkstücks benötigt werden, in die Hauptspindel beladen und daraus entnommen und wieder in das Werkzeugmagazin zurückgebracht werden können. Dadurch ist ein schneller Werkzeugwechsel möglich, der wiederum die Zeiten verkürzt, in denen die Werkzeugmaschine keine Bearbeitung durchführt.

An das Bearbeitungsmodul 12 angekoppelt ist ein Aufspannmodul 24. Dieses Aufspannmodul 24 ist im Wesentlichen quaderförmig gestaltet und ist an einer seiner vertikalen Stirnseiten mit Mitteln 26 zum Ankoppeln des Bearbeitungsmoduls versehen, die es ermöglichen, das Aufspannmodul starr an das Bearbeitungsmodul 12 anzukoppeln. Das Aufspannmodul 24 ist als NC-Drehtisch ausgestaltet, der eine Drehung der Werkstücke um eine vertikal verlaufende Achse ermöglicht, wenn sie auf dem Drehtisch aufgespannt sind. Dadurch wird es möglich, die Werkstücke während des Bearbeitens bezüglich der Spindel in unterschiedlichen Positionen zu präsentieren,

Schließlich ist das Aufspannmodul 24 derart mit einem Palettenwechsler 28 verbunden, dass der Palettenwechsler 28 in einem Winkel von etwa 45° bezüglich der Mittelebene des Bearbeitungs- und des Aufspannmoduls, die parallel zur Spindelachsrichtung verläuft, angebracht ist. Dies bietet eine gute Zugänglichkeit an das Palettenwechselmodul 28, die insbesondere beim Rüsten, d. h. Aufspannen und Abnehmen der Werkstücke erforderlich ist.

In der in Figuren 1 und 2 dargestellten Werkzeugmaschine ist das Palettenwechselmodul zur Aufnahme von zwei Paletten eingerichtet. Dabei ist es grundsätzlich vorteilhaft, mehr als eine Aufnahmemöglichkeit für Paletten vorzusehen, da dann hauptzeitparallel, d. h. während des Bearbeitens eines Werkstücks, der Rüstvorgang für das nächste bzw. vorhergehende Werkstück vorgenommen werden kann.

Das Aufspannmodul 28 ist wiederum als Drehteller gestaltet, dessen Drehachse parallel zur Drehachse des Aufspannmodul-Drehtischs verläuft, also vertikal. Die Drehachse schneidet dabei in der in Figuren 1 und 2 dargestellten Werkzeugmaschine eine fiktive Linie, die vom Mittelpunkt des im Wesentlichen quaderförmigen Aufspanntischs 24 zu einer von dessen Ecken, nämlich der Ecke rechts unten in Figur 1, verläuft. Dabei ist die Asymmetrie des Anbringens des Drehtellers 28 als Palettenwechselmodul so gewählt, dass das Palettenwechselmodul über zwei der vertikal verlaufenden Stirnflächen des im Wesentlichen quaderförmigen Aufspannmoduls 24 vorsteht, nämlich die in Figur 1 untere Stirnfläche sowie die in Figur 1 rechte Stirnfläche. Dies ermöglicht eine gute Zugänglichkeit zum Bearbeitungsraum von der dritten Stirnfläche, die nicht durch das überstehende Drehteller behindert wird.

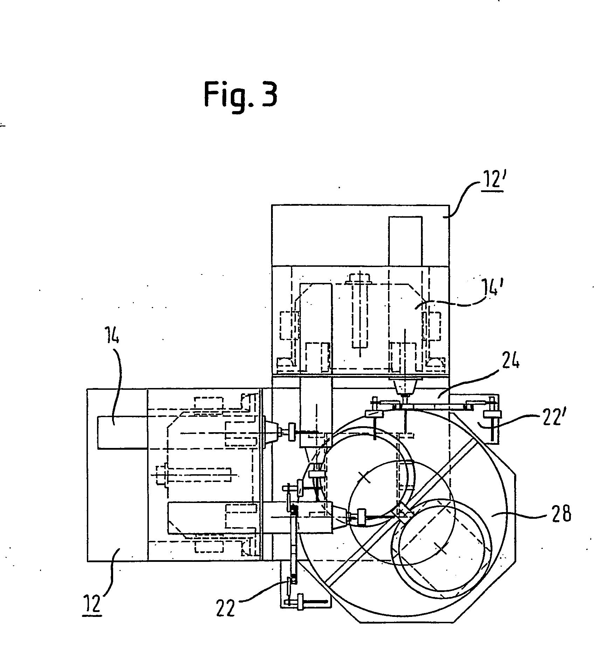

Figur 3 zeigt eine Ausführungsform der erfindungsgemäßen Werkzeugmaschine 10. Dabei ist der Aufbau im Wesentlichen gleich zu dem aus Figur 1, wobei der Unterschied darin liegt, dass ein zweites Bearbeitungsmodul 12' an der freien Stirnfläche des quaderförmigen Aufspannmoduls 24 angebracht ist, über die das Palettenwechselmodul 28 in der ersten in Figur 1 gezeigten Ausführungsform nicht übersteht. Die Spindeln 14 des ersten Bearbeitungsmoduls 12 sowie die Spindel 14' des zweiten Bearbeitungsmoduls 12' sind dabei jeweils horizontal angeordnet und zueinander in einem Winkel von 90°. In der in Figur 3 dargestellten Ausführungsform sind die Bearbeitungsmodule 12 und 12' gleich gestaltet. Es ist jedoch auch denkbar, zwei verschiedene Bearbeitungsmodule 12 und 12' einzusetzen, beispielsweise ein Dreiachsbearbeitungsmodul und ein Zweiachsbearbeitungsmodul bzw. zwei Dreiachsmodule, die jedoch unterschiedlich aufgebaut sind.

Für das zweite Bearbeitungsmodul 12' ist ferner ein zweites Werkzeugmagazin 22' entsprechend zur Anordnung des ersten Werkzeugmagazins 22 bezüglich des ersten Bearbeitungsmoduls 12 vorgesehen. Durch die in Figur 3 dargestellte Anordnung ist es möglich, das auf dem Aufspannmodul 24 aufgespannte Werkstück mit zwei Spindeln 14 und 14' gleichzeitig bzw. wechselweise zu bearbeiten und somit eine gute Zugänglichkeit zum Werkstück und eine rasche Bearbeitung zu gewährleisten. Dies ist insbesondere dann vorteilhaft, wenn das Werkstückaufspannmodul nicht als Drehtisch ausgestaltet ist und somit keine Drehbewegung des Werkstücks während der Bearbeitung erlaubt, da dann das Werkstück besser zugänglich

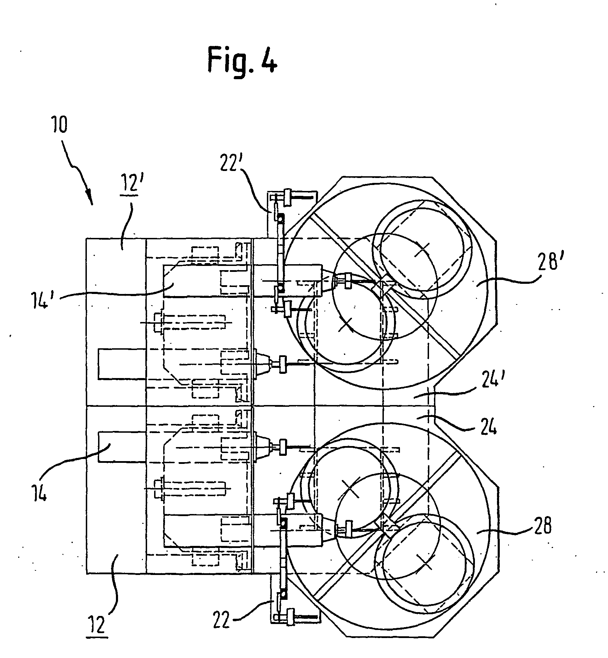

Eine weitere Werkzeugmaschine die nicht Gegenstand der Erfindung ist, ist in Figur 4 dargestellt. Diese Werkzeugmaschine umfasst zwei symmetrisch angeordnete Einheiten, die jeweils aus einem Bearbeitungsmodul, einem Aufspannmodul und einem Palettenwechselmodul bestehen. Die in Figur 4 dargestellte Werkzeugmaschine 10 ist als sogenannte Synchro-Werkzeugmaschine ausgeführt, d. h. es können zwei Werkstücke voneinander unabhängig durch jeweils eine Spindel 14 bzw. 14' bearbeitet werden, auch beispielsweise mit unterschiedlichen Bearbeitungsprogrammen. Die Rüstvorgänge auf dem Palettenwechselmodul 28 bzw. 28' können voneinander unabhängig vorgenommen werden, so dass insgesamt eine Bearbeitung zweier Werkstücke gleichzeitig auf engem Raum möglich ist und die in Figur 4 dargestellte Werkzeugmaschine 10 dennoch kompakt bleibt. Die einander entsprechenden Module 12, 12'; 24, 24' und 28, 28' sind dabei zueinander jeweils symmetrisch bezüglich einer Symmetrieebene angeordnet, die das erste Bearbeitungsmodul 12 und das erste Aufspannmodul 24 vom zweiten Bearbeitungsmodul 12' und dem zweiten Aufspannmodul 24' trennt. Diese Anordnung bei einer gleichbleibend guten Zugänglichkeit zum Palettenwechselmodul 28 bzw. 28' wird dadurch erreicht, dass das Palettenwechselmodul 28 jeweils außermittig, d. h. asymmetrisch, bezüglich des jeweiligen Aufspannmoduls 24 und Bearbeitungsmoduls 12 bzw. 24', 12', angeordnet ist.

Der wesentliche Aspekt der Erfindung liegt somit darin, eine Werkzeugmaschine vorzusehen, die modular aufgebaut ist und bei der aufgrund der asymmetrischen Anordnung eines Palettenwechselmoduls verschiedene Maschinenkonzepte, d. h. Einspindler, Zweispindler mit Übereckanordnung der Spindeln ohne Veränderungen der Anordnung des Palettenwechselmoduls bezüglich des Aufspannmoduls möglich sind.

## Patentansprüche

1. Werkzeugmaschine (10), insbesondere zur spangebenden Bearbeitung von Werkstücken, umfassend:
- zwei Bearbeitungsmodule (12, 12') jeweils mit mindestens einer Spindel (14, 14') mit horizontal ausgerichteter Spindelachse;
- mindestens ein Aufspannmodul (24) mit horizontal ausgerichteter und um eine vertikale Achse drehbarer Aufspannfläche für mindestens ein Werkstück, wobei das Aufspannmodul (24) Mittel (26) zum starren Ankoppeln an die Bearbeitungsmodule (12, 12') aufweist und das mindestens eine Aufspannmodul (24) und die Bearbeitungsmodule (12, 12') parallel zur Spindelachsrichtung mindestens eine fiktive Mittelebene aufweisen; **dadurch gekennzeichnet dass**
- die Bearbeitungsmodule (12, 12') zueinander im Winkel von 90° an das Aufspannmodul (24) angeschlossen sind, und
- mindestens ein Palettenwechselmodul (28), wobei das Palettenwechselmodul (28) außermittig zu jeder der fiktiven Mittelebenen angeordnet ist, die jeweils parallel zu den Spindelachsen verlaufen und an das Aufspannmodul (24) asymmetrisch bezüglich der zur Spindelachsrichtung parallelen Mittelebene angekoppelt ist.

2. Werkzeugmaschine (10) nach Anspruch 1, **dadurch gekennzeichnet, dass** das Aufspannmodul (24) im Wesentlichen quaderförmig ist und das Palettenwechselmodul (28) so außermittig an das Aufspannmodul (24) angekoppelt ist, dass es über maximal zwei der vertikal ausgerichteten Seitenflächen des Quaders übersteht.

3. Werkzeugmaschine (10) nach Anspruch 1 oder 2, **dadurch gekennzeichnet, dass** das Palettenwechselmodul (28) im Winkel von 45° zu der Mittelebene angekoppelt ist.

4. Werkzeugmaschine (10) nach einem der vorhergehenden Ansprüche, **dadurch gekennzeichnet, dass** das Aufspannmodul (24) vertikal verlaufende Stirnflächen aufweist, und das Palettenwechselmodul (28) so angeordnet ist, dass es im Wesentlichen im Bereich desjenigen Kreuzungspunkts zweier Stirnflächen des Aufspannmoduls angeordnet ist, an denen kein Bearbeitungsmodul (12, 12') vorgesehen ist.

5. Werkzeugmaschine (10) nach einem der vorhergehenden Ansprüche, **dadurch gekennzeichnet, dass** das Bearbeitungsmodul (12) als Drei-Achs-Bearbeitungseinheit ausgestaltet ist.

6. Werkzeugmaschine (10) nach einem der vorhergehenden Ansprüche, **dadurch gekennzeichnet, dass** das Bearbeitungsmodul (12) mindestens ein Werkzeugmagazin (22) aufweist.

7. Werkzeugmaschine (10) nach einem der vorhergehenden Ansprüche, **dadurch gekennzeichnet, dass** das Aufspannmodul (24) ein Drehtisch ist.

8. Werkzeugmaschine (10) nach einem der vorhergehenden Ansprüche, **dadurch gekennzeichnet, dass** das Palettenwechselmodul (28) zur Aufnahme mindestens zweier Paletten eingerichtet ist.

9. Werkzeugmaschine (10) nach einem der vorhergehenden Ansprüche, **dadurch gekennzeichnet, dass** das Palettenwechselmodul (28) als Drehteller gestaltet ist.

## Claims

1. Machine tool (10), in particular for the machining of work pieces, including:
- two machining modules (12, 12') each with at least one spindle (14, 14') with horizontally oriented spindle axis;
- at least one mounting module (24) with a horizontally oriented mounting surface rotatable about a vertical axis for at least one work piece, the mounting module (24) comprising means (26) for rigid coupling to the machining modules (12, 12'), and the at least one mounting module (24) and the machining modules (12, 12') comprising at least one fictitious centre plane parallel to the spindle axis direction;
**characterised in that**
- the machining modules (12, 12') are connected to the mounting module (24) at an angle of 90° to each other, and
- at least one pallet-changing module (28), the pallet-changing module (28) being arranged eccentrically to each of the fictitious centre planes which in each case run parallel to the spindle axes, and being coupled to the mounting module (24) asymmetrically to the centre plane parallel to the spindle axis direction.

2. Machine tool (10) according to claim 1, **characterised in that** the mounting module (24) is substantially cuboid and the pallet-changing module (28) is coupled to the mounting module (24) eccentrically in such a way that it protrudes beyond not more than two of the vertically oriented side faces of the cuboid.

3. Machine tool (10) according to claim 1 or 2,
**characterised in that** the pallet-changing module (28) is coupled at an angle of 45° to the centre plane.

4. Machine tool (10) according to any of the preceding claims, **characterised in that** the mounting module (24) has vertically extending end faces, and the pallet-changing module (28) is arranged in such a way that it is arranged substantially in the region of the point of intersection of two end faces of the mounting module at which no machining module (12, 12') is provided.

5. Machine tool (10) according to any of the preceding claims, **characterised in that** the machining module (12) is designed as a triple-axis machining unit.

6. Machine tool (10) according to any of the preceding claims, **characterised in that** the machining module (12) has at least one tool magazine (22).

7. Machine tool (10) according to any of the preceding claims, **characterised in that** the mounting module (24) is a turntable.

8. Machine tool (10) according to any of the preceding claims, **characterised in that** the pallet-changing module (28) is designed to receive at least two pallets.

9. Machine tool (10) according to any of the preceding claims, **characterised in that** the pallet-changing module (28) is designed as a turntable.

## Revendications

1. Machine-outil (10), en particulier pour usinage avec enlèvement de copeaux de pièces d'oeuvre, comprenant :
- deux modules d'usinage (12, 12'), chacun ayant au moins une broche (14, 14') à axe de broche orienté horizontalement ;
- au moins un module de bridage (24), ayant une face de bridage orientée horizontalement et susceptible de tourner autour d'un axe vertical pour au moins une pièce d'oeuvre, le module de bridage (24) présentant des moyens (26) pour établir un couplage rigide aux modules d'usinage (12, 12'), et le au moins un module de bridage (24) et le module d'usinage (12, 12') présentant, parallèlement à la direction d'axe de broche, au moins un plan médian fictif ; **caractérisée en ce que**
- les modules d'usinage (12, 12') sont raccordés au module de bridage (24), en faisant l'un par rapport à l'autre un angle de 90°, et
- au moins un module de changement de palettes (28), le module de changement de palettes (28) étant disposé de façon excentrée par rapport à chacun des plans médians fictifs, qui s'étendent chacun parallèlement aux axes de broche et est couplé au module de bridage (24) de façon asymétrique par rapport au plan médian parallèle à la direction d'axe de broche.

2. Machine-outil (10) selon la revendication 1, **caractérisée en ce que** le module de bridage (24) est de forme sensiblement parallélépipédique, et le module de changement de palettes (28) est couplé au module de bridage (24) de façon excentrée, à un degré faisant qu'il est en saillie sur au maximum deux des faces latérales orientées verticalement du parallélépipède.

3. Machine-outil (10) selon la revendication 1 ou 2.; **caractérisée en ce que** le module de changement de palettes (28) est couplé sous un angle de 45° par rapport au plan médian.

4. Machine-outil (10) selon l'une des revendications précédentes, **caractérisée en ce que** le module de bridage (24) présente des faces frontales s'étendant verticalement, et le module de changement de palettes (28) est disposé de manière qu'il soit disposé sensiblement dans la zone du point de croisement de deux faces frontales, auxquelles aucun module d'usinage (12, 12') n'est prévu.

5. Machine-outil (10) selon l'une des revendications précédentes, **caractérisée en ce que** le module d'usinage (12) est réalisé sous forme d'unité d'usinage à trois axes.

6. Machine-outil (10) selon l'une des revendications précédentes, **caractérisée en ce que** le module d'usinage (12) présente au moins un magasin à outils (22).

7. Machine-outil (10) selon l'une des revendications précédentes, **caractérisée en ce que** le module de bridage (24) est une table tournante.

8. Machine-outil (10) selon l'une des revendications précédentes, **caractérisée en ce que** le module de changement de palettes (28) est équipé pour supporter au moins deux palettes.

9. Machine-outil (10) selon l'une des revendications précédentes, **caractérisée en ce que** le module de changement de palettes (28) est réalisé sous forme de plateau rotatif.
